# EUROPÄISCHE PATENTANMELDUNG

(11) **EP 4 610 037 A1**
(43) Veröffentlichungstag der Anmeldung: **03.09.2025**
(21) Anmeldenummer: 24160742.3
(22) Anmeldetag: 01.03.2024
(51) Int. Cl.: B29D 23/00, B29C 53/30, B29C 63/48, B29C 65/00

(54) **ROHRPRODUKTION VORISOLIERTER ROHRSTANGEN**

(71) Anmelder: Georg Fischer Rohrleitungssysteme AG, 8201 Schaffhausen (CH)
(72) Erfinder: BASELAU, Olaf, 35216 Biedenkopf (DE); ECK, Michael, 78262 Gailingen (DE); GOSMANN, Gerd, 85276 Pfaffenhofen (DE); GREBE, Uwe, 35216 Biedenkopf (DE); JETTI, Sai Kumar, 35075 Gladenbach (DE); SCHMIDT, Alexander, 35094 Lahntal (DE); WISSLER, Frank, 78337 Öhningen (DE)
(74) Vertreter: Fenner, Seraina

(57) **Zusammenfassung**

Verfahren und Produkionsanlage zur Herstellung von vorisolierten Rohrstangen mit folgenden Verfahrensschritten:
• Zuführen eines Endlosmediumrohres einer Transporteinheit einer Produktionsanlage,
• Transportieren des Endlosmediumrohres in Axialrichtung,
• Aufbringen einer geschäumten Isolationsschicht am Aussenumfang des Endlosmediumrohres während des Transports des Endlosmediumrohres,
• Aufbringen einer Aussenschicht am Aussenumfang der Isolationsschicht,
• Trennen des vorisolierten Endlosrohres in einzelne, vorisolierte Rohrstangen,
wobei einzelne Mediumrohrstangen der Produktionsanlage zugeführt und miteinander zum Endlosmediumrohr verbunden werden.

## Beschreibung

Die Erfindung betrifft ein Verfahren und eine Produktionsanlage zur Herstellung von vorisolierten Rohrstangen mit folgenden Verfahrensschritten:
- Zuführen eines Endlosmediumrohres einer Transporteinheit der Produktionsanlage,
- Transportieren dees Endlosmediumrohres in Axialrichtung mittels der Transporteinheit,
- Aufbringen einer geschäumten Isolationsschicht am Aussenumfang des Endlosmediumrohres während des Transports des Endlosmediumrohres mittels einer Isolationsstation,
- Aufbringen einer Aussenschicht am Aussenumfang der Isolationsschicht mittels einer Ummantlungsstation, und Trennen des vorisolierten Endlosrohres in einzelne, vorisolierte Rohrstangen mittels einer Trennstation.

Vorisolierte Rohre werden in verschiedenen technischen Bereichen benötigt. Sie werden für den Transport von heissen und kalten Medien verwendet, um den Wärmeaustausch zu verringern. Deren Herstellverfahren erfolgen indem ein innenliegendes Mediumrohr einer Anlage zugeführt wird, die die Isolationsschicht und die umgebende Mantelschicht aufbringt. Aus dem Stand der Technik ist bekannt, dass das innenliegende Mediumrohr als Endlosmediumrohr, das zu einem Coil aufgewickelt ist, der Anlage zugeführt wird. Nach Aufbringen der Isolationsschicht und der Mantelschicht wird das Endlosrohr in gut handhabbare Rohrstangen geteilt.

Die EP 1 371 469 A2 offenbart ein Herstellverfahren, bei dem das Innenrohr von einer Vorratstrommel abzogen und der Anlage zugeführt wird. Das Innenrohr wird mit einer Schlitzrohr bildenden Folie konzentrisch umgeben, die das Aussenrohr bildet. Zwischen den beiden Rohren wird ein aufschäumbarer Kunststoff eingebracht.

Nachteilig bei einem solchen Verfahren ist, dass exklusiv für die Herstellung von vorisolierten Rohren Coils bzw. auf Vorratstrommeln aufgewundene Rohre produziert werden müssen sowie das Handling der Coils. Zudem ist ein exaktes Richten der Rohre dadurch, dass die Rohre als Coils aufgewunden sind und gekrümmt werden, kaum möglich. Ebenso neigt der Rohrquerschnitt dazu sich oval zu verformen aufgrund der Krümmung durch die Lagerung auf den Vorratstrommeln.

Es ist Aufgabe der Erfindung ein Verfahren und eine Produktionsanlage vorzuschlagen, dass die Wirtschaftlichkeit der Herstellung von vorisolierten Rohrstangen verbessert sowie eine konstant gute Qualität von vorisolierten Rohrstangen zu gewährleisten.

Diese Aufgabe wird erfindungsgemäss dadurch gelöst, dass die Produktionsanlage eine Mediumrohrstangenverbindungsstation aufweist und diese die einzelnen, der Produktionsanlage zugeführten, Mediumrohrstangen miteinander zu einem Endlosmediumrohr verbindet.

Das erfindungsgemässe Verfahren zur Herstellung von vorisolierten Rohrstangen beinhaltet folgende Verfahrensschritte:
- Zuführen eines Endlosmediumrohres einer Transporteinheit einer Produktionsanlage,
- Transportieren des Endlosmediumrohres in Axialrichtung vorzugsweise kontinuierlich,
- Aufbringen einer geschäumten Isolationsschicht am Aussenumfang des Endlosmediumrohres während des Transports des Endlosmediumrohres,
- Aufbringen einer Aussenschicht am Aussenumfang der Isolationsschicht,
- Trennen des vorisolierten Endlosrohres in einzelne, vorisolierte Rohrstangen,
wobei einzelne Mediumrohrstangen der Produktionsanlage zugeführt und miteinander zu einem Endlosmediumrohr verbunden werden.

Die Verbindung der einzelnen Mediumrohrstangen erfolgt vor dem Zuführen der Transporteinheit damit ein Endlosmediumrohr gebildet wird, das vorzugsweise kontinuierlich und als ein Ganzes durch die Produktionsanlage transportiert wird.

Es ist vorteilhaft, wenn das Zuführen der Produktionsanlage des Endlosmediumrohres über mindestens eine Transporteinheit, die vorzugsweise durch eine Abzugseinheit gebildet wird, erfolgt, die das Endlosmediumrohr kontinuierlich in Axialrichtung durch die Produktionsanlage transportiert.

Vorzugsweise erfolgt der Transport kontinuierlich durch die gesamte Produktionsanlage. Es ist vorteilhaft, wenn keine Stopps bei Verfahrensschritten durchgeführt werden, sondern alle Vorgänge während des Transports erfolgen.

Als bevorzugte Ausführungsform hat sich gezeigt, wenn die äussere Oberfläche des Mediumrohres zur besseren Haftung der Isolationsschicht behandelt wird. Die Behandlung erfolgt vorzugsweise während des Transports des Endlosmediumrohres.

Vorzugsweise wird die äussere Oberfläche des Endlosmediumrohres Plasma behandelt. Dadurch wird die äussere Oberfläche aktiviert und die Isolationsschicht hat eine bessere Haftung.

Es ist vorteilhaft, wenn die einzelnen Mediumrohrstangen mittels einer Zuführstation am Anfang der Produktionsanlage nacheinander einer Verbindungsstation der Produktionsanlage zugeführt werden. Vorzugsweise kann als Zuführstation ein Rohrstangenmagazin, Rohrstangenlader oder ähnliche Einheiten verwendet werden. Mittels der Verbindungsstation werden die einzelnen Mediumrohrstangen zu einem Endlosmediumrohr verbunden, welche dann mittels der Transporteinheit durch die Produktionsanlage transportiert wird.

Als vorteilhaft hat sich gezeigt, wenn die zugeführten Mediumrohrstangen mittels der Verbindungsstation an ihren Stirnseiten während des kontinuierlichen Transports miteinander gefügt werden. Dadurch werden die Mediumrohrstangen über eine stoffschlüssige Verbindung miteinander verbunden.

Vorzugsweise werden die zugeführten Mediumrohrstangen während des kontinuierlichen Transports stumpfgeschweisst. Dies erfolgt vorzugsweise mittels einer Heizelement-Stumpfschweissung oder einer Infrarot-Stumpfschweissung. Es ist vorteilhaft, wenn die Verbindungsstation, die vorzugsweise eine Schweissmaschine aufweist, kontinuierlich während des Schweissvorgangs mit dem Mediumsrohr mitfährt und bei abgeschlossener Schweissung wieder an ihren Ausgangsort zurückfährt.

Als bevorzugte Ausführungsform hat sich gezeigt, wenn die zugeführten Mediumrohrstangen mittels eines Rohrverbinders verbunden werden. Hierbei erfolgt eine Kraft- und Formschlüssige Verbindung zwischen den Mediumrohrstangenenden und dem Rohrverbinder. Der Rohrverbinder ist vorzugsweise als Innennippel ausgebildet.

Vorzugsweise wird der Rohrverbinder im Inneren bzw. am Innenumfang der beiden aufeinanderfolgenden Enden der Mediumrohrstangen angeordnet und bildet einen Reibschluss zwischen dem Rohrverbinder und jeweils den beiden Enden der Mediumrohrstangen, um den Transport des Endlosmediumrohres, die durch den eingesetzten Rohrverbinder gebildet wird, in Axialrichtung zu gewährleisten.

Die geschäumte Isolationsschicht, die vorzugsweise aus einem PUR-Schaum gebildet ist, wird an der Isolationsstation in der Produktionsanlage auf die äussere Oberfläche des Endlosmediumrohres aufgebracht. Dabei wird das Endlosmediumrohr kontinuierlich in einer konstanten Bewegung in Axialrichtung zentrisch durch einen Korrugator geführt. Dieser bildet durch umlaufende, über eine definierte Länge synchron und parallel zum Endlosmediumrohr mitlaufenden Halbschalen die Schaumform, die den Isolationsschaum formt. In der Regel werden Korrugatoren für die Herstellung von Wellrohren verwendet, jedoch werden damit auch Rohr mit einer glatten, bzw. planen Umfangsfläche hergestellt. Vorzugsweis weist die geschäumte Isolationsschicht eine plane Umfangfläche auf, wobei es durchaus vorstellbar ist bei Bedarf eine wellenförmige Aussenstruktur vorzusehen. Die Dosierung des Schaums erfolgt mittels einer Reaktionsgiessmaschine über einen Mischkopf direkt im Eintrittsbereich des Endlosmediumrohres in den Korrugator. Es ist vorteilhaft, wenn im Korrugator eine Folie zur Formtrennung eingebracht ist, wodurch sich die Halbschalen leicht vom Isolationsschaum entfernen lassen. Durch die axiale Bewegung des Endlosmediumrohres, der Folie und der Halbschalen wird die Schaumschicht weiter transportiert. Im weiteren Verlauf des Korrugators expandiert und verfestig sich der Schaum bis zum Austritt aus dem Korrugator.

Die Aussenschicht wird am Aussenumfang der Isolationsschicht bzw. des ausgehärteten Schaums aufgebracht. Die Aussenschicht besteht vorzugsweise aus einem Thermoplast. Diese Ummantelung erfolgt vorzugsweise mittels eines Ummantelungsrohrkopfes. Es ist vorteilhaft, wenn nach dem Abkühlen der Aussenschicht, das vorisolierte Endlosrohr eine weitere Transporteinheit, die vorzugsweise als Abzugseinheit ausgebildet ist, durchläuft. Anschliessend erfolgt die Trennung in vorisolierte Rohrstangen.

Als vorteilhaft hat sich gezeigt, wenn die Trennung des vorisolierten Endlosrohres in einzelne, vorisolierte Rohrstangen in der Verbindungsstelle der einzelnen Mediumrohrstangen erfolgt. Dadurch wird das Endlosrohr wieder an den Stellen getrennt, wo sie verbunden wurde womit eine einwandfreie innere Oberfläche in den vorisolierten Rohrstangen gewährleistet ist.

Es ist vorteilhaft, wenn die Erkennung der Verbindungsstelle über eine Streckenverfolgung oder eine Detektion erfolgt. Dazu kennt die Produktionsanlage die zurückgelegte Strecke und weiss, wann die Verbindungsstelle der einzelnen Rohrstangen die Trennstation zur Trennung erreicht hat, oder in die Verbindung wurde bsp. ein Indikator mit eingebunden, wie beispielsweise ein metallisches Element das detektiert wird, wenn es die Trennstation erreicht hat.

Die erfindungsgemässe Produktionsanlage zur Herstellung vorisolierter Rohre beinhaltet eine Transporteinheit zum Zuführen und Transportieren eines Endlosmediumrohres in Axialrichtung, eine Isolationsstation zum Aufbringen einer geschäumten Isolationsschicht am Aussenumfang des Endlosmediumrohres, eine Ummantelungsstation zum Aufbringen der Aussenschicht am Aussenumfang der Isolationsschicht und eine Trennstation zur Trennung des vorisolierten Endlosrohres in einzelne vorisolierte Rohrstangen, wobei die Produktionsanlage eine Mediumrohrstangenverbindungsstation aufweist.

Es ist vorteilhaft, wenn die Mediumrohrstangenverbindungsstation am Anfang der Produktionsanlage angeordnet ist. Die Verbindungsstation weist vorzugsweise eine Stumpfschweissmaschine auf, die sich kontinuierlich mit den Mediumrohrstangen axial bewegt bis die Schweissung fertiggestellt ist und sie dann wieder in ihre Ausgangsposition fährt.

Vorzugsweise wird an der Mediumrohrverbindungsstation ein Rohrverbinder in zwei aufeinanderfolgende Mediumrohrstangenenden am Innenumfang angeordnet, dieser verbindet die Mediumrohrstangenenden miteinander.

Es ist vorteilhaft, wenn die Produktionsanlage eine Zuführstation zur Zuführung der Mediumrohrstangen aufweist. Vorzugsweise ist die Zuführstation am Anfang der Produktionsanlage angeordnet. Darauf folgt die Mediumrohrverbindungsstation, die die einzelnen Mediumrohrstangen miteinander zu einem Endlosmeduimrohr verbindet. Als bevorzugte Zuführstationen haben sich Rohrstangenmagazine, Rohrstangenlader oder ähnliche Einheiten gezeigt.

Als bevorzugte Ausführungsform weist die Isolationsstation eine Reaktionsgiessmaschine und einen Korrugator auf. Wie zuvor erläutert wird mittels der Reaktionsgiessmaschine und dem Korrugator der Schaum auf den Aussenumfang des Endlosmediumrohres appliziert und ausgehärtet.

Es ist vorteilhaft, wenn die Produktionsanlage eine Behandlungsstation zur Behandlung des Aussenumfangs des Mediumrohres aufweist. Vorzugsweise ist die Behandlungsstation als Plasmabehandlungsstation augebildet.

Alle Ausgestaltungmöglichkeiten sind untereinander frei kombinierbar sowie zur Vermeidung von Wiederholungen sich die Merkmale des Verfahrens auch automatisch auf die Produktionsanlage und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigt:

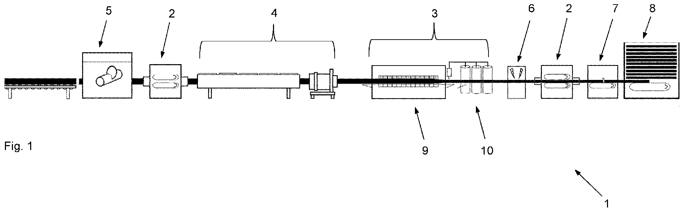

- Fig. 1: eine schematische Ansicht einer erfindungsgemässen Produktionsanlage.

Die in Fig. 1 dargestellte Abbildung zeigt eine erfindungsgemässe schematisch dargestellte Produktionsanlage 1. Die Produktionsanlage beinhaltet mindestens eine Transporteinheit 2 zum Zuführen und kontinuierlichen Transportieren des Endlosmediumrohres wie auch des vorisolierten Endlosrohres in axialer Richtung. In Transportrichtung danach angeordnet, weist die Produktionsanlage 1 eine Isolationsstation 3 zum Aufbringen einer geschäumten Isolationsschicht am Aussenumfang des Endlosmediumrohres auf. Zum Ummanteln der Isolationsschicht weist die Produktionsanlage 1 nach der Isolationsstation eine Ummantelungsstation 4 auf. Diese bildet die extrudierte Aussenschicht um den Aussenumfang der Isolationsschicht herum. Um das vorisolierte Endlosrohr in vorisolierte Rohrstangen zu schneiden, ist am Ende eine Trennstation 6 angeordnet, welche das vorisolierte Endlosrohr in vorisolierte Rohrstangen unterteilt. Wobei die Unterteilung an den Verbindungsstellen der Mediumrohrstangen erfolgt. Vorzugsweise erkennt das die Anlage über eine Streckenverfolgung oder eine Detektion, indem an der Verbindungsstelle ein detektierbares Objekt wie z.B. ein metallisches Element eingebracht wird.

Am Anfang der Produktionsanlage 1 ist vorzugsweise eine Zuführstation 8 angeordnet die die Mediumrohrstangen der Produktionsanlage 1 bzw. der Mediumrohrstangenverbindungsstation 7 zuführt. Diese werden dann in der nachgeordneten Mediumrohrstangenverbindungsstation 7 miteinander verbunden. Beispielsweise mittels einer Stumpfschweissmaschine oder indem ein Rohrverbinder in die Enden der Mediumrohrstangen eingebracht wird und die Rohrenden über einen Reibschluss mit dem Rohrverbinder miteinander verbunden sind. Als vorteilhaft hat sich gezeigt, wenn die Isolationsstation 3 eine Reaktionsgiessmaschine 10 und ein Korrugator 9 aufweist, um die Isolationsschicht aufzubringen und aushärten zu lassen.

### Bezugszeichenliste

- 1: Produktionsanlage
- 2: Transporteinheit
- 3: Isolationsstation
- 4: Ummantlungsstation
- 5: Trennstation
- 6: Behandlungsstation
- 7: Mediumrohrstangenverbindungsstation
- 8: Zuführstation
- 9: Korrugator
- 10: Reaktionsgiessmaschine

## Patentansprüche

1. Verfahren zur Herstellung von vorisolierten Rohrstangen mit folgenden Verfahrensschritten:
• Zuführen eines Endlosmediumrohres einer Transporteinheit einer Produktionsanlage,
• Transportieren des Endlosmediumrohres in Axialrichtung,
• Aufbringen einer geschäumten Isolationsschicht am Aussenumfang des Endlosmediumrohres während des Transports des Endlosmediumrohres,
• Aufbringen einer Aussenschicht am Aussenumfang der Isolationsschicht,
• Trennen des vorisolierten Endlosrohres in einzelne, vorisolierte Rohrstangen,
**dadurch gekennzeichnet, dass** einzelne Mediumrohrstangen der Produktionsanlage zugeführt und miteinander zum Endlosmediumrohr verbunden werden.

2. Verfahren nach Anspruch 1, **dadurch gekennzeichnet, dass** der Transport kontinuierlich erfolgt.

3. Verfahren nach einem der Ansprüche 1 oder 2, **dadurch gekennzeichnet, dass** die äussere Oberfläche des Endlosmediumrohres oder der Mediumrohrstangen zur besseren Haftung der Isolationsschicht behandelt wird.

4. Verfahren nach einem der Ansprüche 1 bis 3, **dadurch gekennzeichnet, dass** die äussere Oberfläche des Endlosmediumrohres Plasma behandelt wird.

5. Verfahren nach einem der Ansprüche 1 bis 4, **dadurch gekennzeichnet, dass** die einzelnen Mediumrohrstangen mittels einer Zuführstation am Anfang der Produktionsanlage nacheinander einer Verbindungsstation zugeführt werden.

6. Verfahren nach einem der Ansprüche 1 bis 5, **dadurch gekennzeichnet, dass** die zugeführten Mediumrohrstangen an ihren Stirnseiten während des kontinuierlichen Transports miteinander gefügt werden.

7. Verfahren nach einem der Ansprüche 1 bis 6, **dadurch gekennzeichnet, dass** die zugeführten Mediumrohrstangen während des kontinuierlichen Transports stumpfgeschweisst werden.

8. Verfahren nach einem der Ansprüche 1 bis 7, **dadurch gekennzeichnet, dass** die zugeführten Mediumrohrstangen mittels eines Rohrverbinders verbunden werden.

9. Verfahren gemäss Anspruch 8, **dadurch gekennzeichnet, dass** der Rohrverbinder am Innenumfang der beiden aufeinanderfolgenden Mediumrohrstangenenden angeordnet wird und einen Reibschluss zwischen dem Rohrverbinder und jeweils den beiden Mediumrohrstangenenden gebildet wird, um den Transport des Endlosmediumrohres in Axialrichtung zu gewährleisten.

10. Verfahren nach einem der Ansprüche 1 bis 9, **dadurch gekennzeichnet, dass** die Trennung des vorisolierten Endlosrohres in einzelne, vorisolierte Rohrstangen an der Position der Verbindungsstelle der einzelnen Mediumsrohrstangen erfolgt.

11. Verfahren nach Anspruch 10, **dadurch gekennzeichnet, dass** die Erkennung der Verbindungsstelle über eine Streckenverfolgung oder eine Detektion erfolgt.

12. Produktionsanlage (1) zur Herstellung vorisolierter Rohrstangen gemäss den Ansprüchen 1 bis 11 beinhaltend eine Transporteinheit (2) zum Zuführen und Transportieren eines Endlosmediumrohres in Axialrichtung, eine Isolationsstation (3) zum Aufbringen einer geschäumten Isolationsschicht am Aussenumfang des Endlosmediumrohres, eine Ummantelungsstation (4) zum Aufbringen der Aussenschicht am Aussenumfang der Isolationsschicht und eine Trennstation (5) zur Trennung des vorisolierten Endlosrohres in einzelne vorisolierte Rohrstangen, **dadurch gekennzeichnet, dass** die Produktionsanlage (1) eine Mediumrohrstangenverbindungsstation (7) aufweist.

13. Produktionsanlage (1) nach Anspruch 12, **dadurch gekennzeichnet, dass** die Produktionsanlage (1) einen Zuführstation (8) zur Zuführung der Mediumrohrstangen aufweist.

14. Produktionsanlage (1) nach Anspruch 12 oder 13, **dadurch gekennzeichnet, dass** die Isolationsstation (3) eine Reaktionsgiessmaschine (10) und einen Korrugator (9) aufweist.

15. Produktionsanlage (1) nach einem der Ansprüche 12 bis 14, **dadurch gekennzeichnet, dass** die die Produktionsanlage (1) eine Behandlungsstation (6) zur Behandlung des Aussenumfangs des Mediumrohres aufweist.
